(19) Europäisches Patentamt
European Patent Office
Office européen des brevets

(11) **EP 4 559 613 A1**

(12) **EUROPEAN PATENT APPLICATION**

(43) Date of publication:
**28.05.2025 Bulletin 2025/22**

(21) Application number: **24213105.0**

(22) Date of filing: **14.11.2024**

(51) International Patent Classification (IPC):
**B23K 11/04** (2006.01)     **B23K 37/02** (2006.01)
**B23K 37/04** (2006.01)

(52) Cooperative Patent Classification (CPC):
**B23K 11/04; B23K 37/0229; B23K 37/0435**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 IT 202300024789**

(71) Applicant: **SMS group S.p.A.**
**33017 Tarcento (UD) (IT)**

(72) Inventors:
• **SARO, Andrea**
  **I-33017 Tarcento, UDINE (IT)**
• **DEL NEGRO, Giorgio**
  **I-33017 Tarcento, UDINE (IT)**
• **BULFONE, Nicola**
  **I-33017 Tarcento, UDINE (IT)**

(74) Representative: **Zanettin, Gianluigi et al**
**Jacobacci & Partners S.p.A.**
**Piazza Mario Saggin, 2**
**35131 Padova (IT)**

(54) **WELDING MACHINE FOR LONGITUDINAL METAL OBJECTS, IN PARTICULAR BILLETS**

(57)     The present invention relates to a welding machine (1) of the flash welding type, intended to weld together the tail of a first longitudinal metal product with the head of a second longitudinal metal product along an advancement direction (X). The machine comprises: - a carriage (10) adapted to slide along the advancement direction (X); - a first structure (20) with first gripping means (21, 22);
- a second structure (30), which is slidingly supported by said carriage (10) with second gripping means (31, 32); - a power group (40) which can be supplied with mains voltage and is provided with conductors (210; 121, 122), connected to the first gripping means (21, 22) and the second gripping means (31, 32), respectively. The power group (40) comprises: - at least one inverter (41);
- at least one transformer (42); - at least one rectifier (43); - a control unit (50). The inverter (41) is a single-phase or poly-phase inverter with variable frequency. The control unit (50) being programmed to operate said inverter (41) at frequencies greater than 700 Hz. The transformer is sized to deliver a predetermined nominal power Pn at a predetermined nominal supply frequency fn. Having defined an operating power Pex to be generated during welding, alternatively: - said predetermined nominal power Pn of the transformer is less than said predetermined operating power Pex and said nominal supply frequency fn is less than 700Hz, said at least one transformer (42) being sized so as to deliver, at frequencies greater than 700HZ, an actual power Pe equal to or greater than said predetermined operating power Pex; or - said predetermined nominal power Pn of the transformer is at least equal to said predetermined operating power Pex and said nominal supply frequency fn is greater than 700Hz, said at least one transformer (42) being sized so as to deliver, at frequencies greater than said nominal supply frequency fn, an actual power Pe greater than said predetermined operating power Pex.

FIG.1

## Description

Field of application

The present invention relates a welding machine for longitudinal metal objects.

In particular, such a welding machine is of the flash type and is adapted to process longitudinal metal objects, such as billets, bars or blooms.

Operatively, the welding machine is usually arranged upstream of a rolling mill and welds together the head and tail of two consecutive longitudinal products along a transport line, in particular a roller line.

Background art

Generally, in rolling mills, the individual metal products coming directly from the casting apparatus or storage warehouses are welded together so that they can be rolled seamlessly.

Such metal products are typically semi-finished ferrous products, such as, billets, bars or blooms, for example.

The welding is carried out by joining the tail of a product to the head of the next product.

Generally, the welding is done according to a technique known as flash welding, i.e., through electrical discharges generated by electric power supplies connected to the products to be welded.

More in detail, a controlled current flow is caused to flow through the two faces of metal products which must be welded together. This passage of current creates energy that brings the two faces to the melt temperature ("Flashing" step). When the two faces are completely molten, the current flow is interrupted, and the two surfaces are crushed together so as to amalgamate them together until they are completely joined. ("Upsetting" step).

Therefore, during welding, the products need to be firmly blocked together. For such a purpose, the welding machine is provided with gripping means adapted to hold the products in place during welding. Normally, the gripping means also operate as conductors of the electric welding current.

Generally, such gripping means typically comprise clamps, which directly contact the products to be welded. As the welding is carried out, the clamps which hold the head and tail of the products to be welded are brought close to each other by hydraulic or electric cylinders, referred to as upsetting cylinders. This operation is required to join the ends to be welded, eliminate any inclusions and air bubbles, and compensate for the loss of material caused by the melting, and allow the actual adhesion between the two components being welded.

A known type of flash welding machine comprises a carriage movable along a track positioned on a segment of the transport line of longitudinal metal objects. The machine further comprises two separate structures, both mounted on-board the carriage and each equipped with a pair of clamps. Such structures are substantially parallel to each other and inclined at an angle of about 45° with respect to the plane defined by the machine carriage.

The transformer, provided with conductors connected to the two structures to supply electric current to the tail and head of the two products to be welded by means of the respective clamps, is arranged above the inclined upper surfaces of the two structures. As a result, access, maintenance of the internal parts of the machine, as well as disassembly and removal of heavy parts are difficult, because these operations are carried out by operators who get inside the machine itself.

The problems outlined above are enhanced by the fact that, due to its operating nature, a welding machine is in a particularly harsh environment due to the very high temperatures of the billets being processed, the high rate of dirt generated by the latter, the generation of spatter of molten material resulting from the welding process, and the cooling water used to preserve the machine components being discharged onto the structures.

Moreover, the spaces which are generally provided for the welding machine prove to be very narrow.

In this situation, possible technical solutions cannot disregard the following requirements:

- the most sensitive components must be moved as far away as possible from the axis on which the welding occurs;
- spaces for greater accessibility for conventional lifting equipment must be created to operate within the machine itself, so that ordinary and extraordinary machine maintenance operations are facilitated;
- the total size of the welding machine must be reduced or at least not increased so as to make the use thereof more versatile in space.

In this context, it must be considered that the energy required by the welding process is of high magnitude during the melting step. Therefore, the transformer group required to deliver these energy volumes is characterized by dimensions and weights which:

- occupy a considerable space, limiting the passages needed by operators to freely access the machine and carry out maintenance operations;
- need a dedicated structure for their support irrespective of where they are mounted;
- in case of failure, disassembly and assembly operations prove to be complex and time-consuming.

Another consideration is related to the fact that the transformer group requires to be positioned as close as possible to the welding clamps. This aspect is dictated by the following reasons:

- the welding machine is a movable apparatus which thus moves several meters in the transit direction of the longitudinal metal products;
- inevitably, by increasing the distance between the transformer group and the welding clamps, the electrical impedance increases, thus affecting the passage of the electric current required for welding.

The problem of machine accessibility for the operators was addressed in international application WO2021/156738A1. The suggested solution is to move the transformers from the top of the gripping structures to a side position, defined by a cantilevered carriage appendage extending outside the main structure of the carriage itself on which the clamp structures are housed and which is delimited by two beams parallel to the sliding direction of the longitudinal metal products to be welded. Such an arrangement of transformers allows freeing the access to the top of the gripping structures. This makes it easy to maintain the welding machine (in particular, the clamp structures) with the possibility to operate with aids, such as cranes and overhead cranes, for moving heavy bodies.

However, the solution described in WO2021/156738 A1 has the disadvantage of increasing the plan dimensions of the welding machine and thus the overall size thereof.

Therefore, the need to improve accessibility to the welding machine without simultaneously significantly increasing the size is still unmet to date.

Overview of the invention

Therefore, it is the main object of the present invention to eliminate all or part of the drawbacks of the aforementioned prior art by providing a welding machine for longitudinal metal objects which exhibits increased accessibility without requiring significant increases in size.

It is a further object of the present invention to provide a welding machine for longitudinal metal objects which maintains adequate operating functionality.

It is a further object of the present invention to provide a welding device for longitudinal metal objects which is easy and inexpensive to manage.

It is a further object of the present invention to provide a welding machine for longitudinal metal objects which has no significantly higher construction costs than similar known machines.

Brief description of the drawings

The technical features of the invention according to the aforesaid objects can be clearly found in the contents of the claims hereinbelow and the advantages thereof will become more apparent from the following detailed description, given with reference to the accompanying drawings which show one or more embodiments merely given by way of non-limiting example, in which:

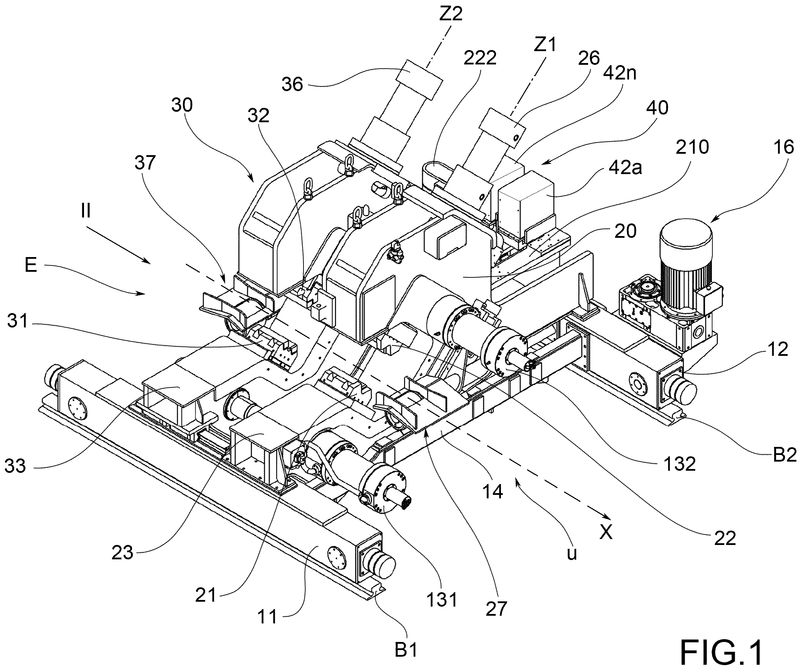

- figure 1 is a top perspective view of a welding machine for longitudinal metal objects according to a preferred embodiment of the invention;
- figure 2 is an orthogonal elevation view of the welding machine in figure 1 according to the arrow II here shown;
- figure 3 is an orthogonal top view of the welding machine in figure 1;
- figure 4 is a perspective view of a component of the welding machine for longitudinal metal objects in figure 1 related to a machine moving carriage;
- figure 5 is a perspective view of a component of the welding machine for longitudinal metal objects in figure 1 related to a machine body;
- figure 6 shows the simplified wiring diagram of the power group of a welding machine according to a preferred embodiment of the invention, configured with the inverter on-board the machine carriage;
- figure 7 shows the simplified wiring diagram of the power group of a welding machine according to a preferred embodiment of the invention, configured with the inverter arranged outside the carriage;
- figure 8 shows the simplified wiring diagram of the power group of a welding machine according to a preferred embodiment of the invention, configured with the inverter on-board the machine carriage and the rectifier integrated into the transformer;
- figure 9 shows the simplified wiring diagram of the power group of a welding machine according to a preferred embodiment of the invention, configured with two transformers connected in parallel;
- figure 10 is a simplified diagram of a transformer; and
- figure 11 is a perspective view of a variant of the carriage in figure 4.

Detailed description

In the accompanying figure, the welding machine for longitudinal metal objects according to the invention is indicated by reference numeral 1 as a whole.

According to a general embodiment of the invention, the welding machine 1 is of the flash welding type and is adapted to process longitudinal metal objects, such as billets, bars or blooms.

The welding machine 1 is intended to be installed upstream of a rolling mill on a transport line (in particular, a roller line) of longitudinal metal products which move along an advancement direction X.

Operatively, the welding machine 1 is adapted to weld together the tail T of a first longitudinal metal product M1 to the head H of a second longitudinal metal product M2 moving consecutively along said advancement direction X.

The welding machine 1 comprises a carriage 10 which acts as a movable support base for the entire welding machine 1 and is adapted to slide along the advancement direction X to follow the movement of the longitudinal objects.

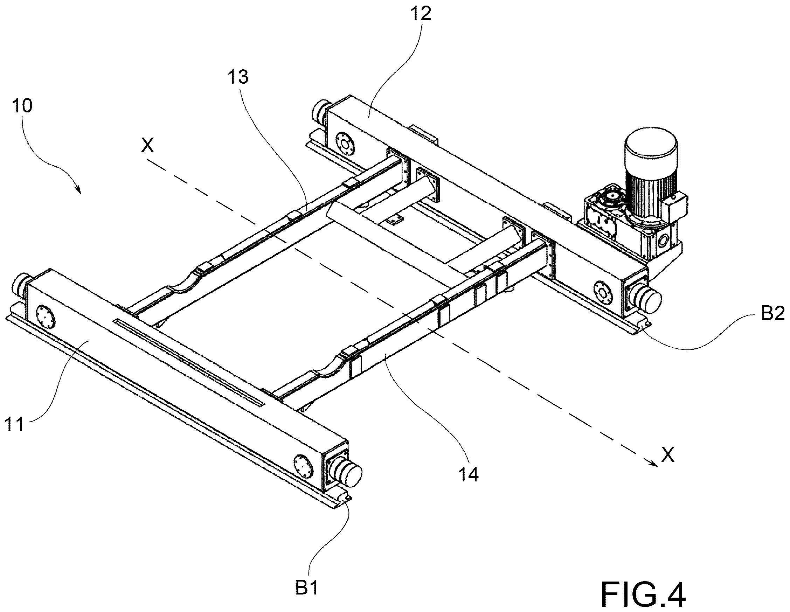

According to a preferred embodiment of the invention, shown in the accompanying figures, and in particular in figure 4, the carriage 10 comprises two beams 11, 12, which are provided with wheels 17 adapted to slide the carriage 10 parallel to said advancement direction X along a track B1, B2 (only a segment of which being shown in figure 4).

More in detail, the two beams 11, 12 are transversely connected to each other by at least two connection beams 13 and 14 to form a framework on which the remaining part of the welding machine 1 rests.

The carriage 10 is provided with motor means 16, kinematically connected to the wheels 17. In particular, the motor means comprise an electric gear motor with pinion-rack type coupling on two tracks B1 and B2.

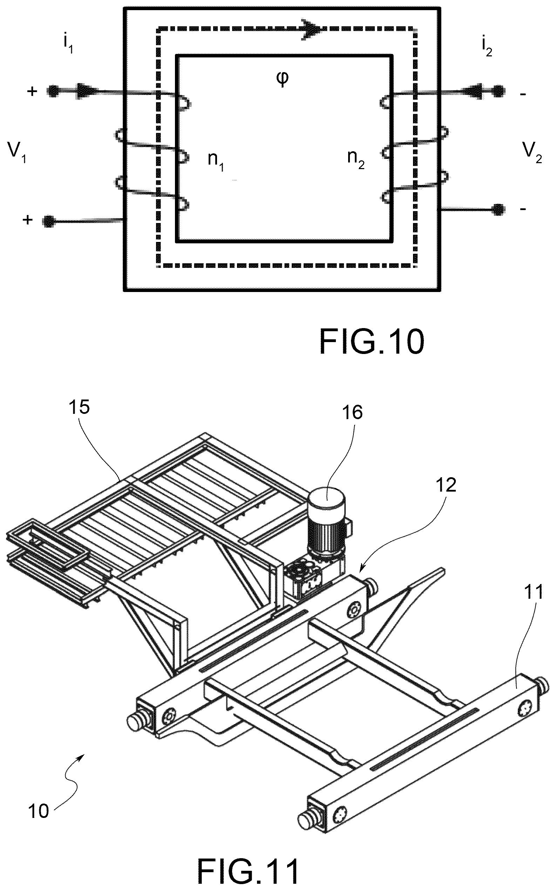

According to an alternative embodiment, shown in figure 11, the carriage 10 can comprise an appendage 15 extending in a cantilevered manner outside said framework transversely to said advancement direction X for housing one or more components of the welding machine.

According to the aforesaid general embodiment of the invention, the welding machine 1 comprises a first structure 20 which is supported by said carriage 10 and defines in a portion thereof a first passage seat 20a for the longitudinal metal products advancing along said transport line.

The welding machine 1 also comprises a second structure 30 which is slidingly supported by said carriage 10, to slide parallel to the advancement direction X with respect to both the first structure 20 and the carriage 10 itself.

Such a second structure 30 defines in a portion thereof a second passage seat 30a for the longitudinal metal products which advance along said transport line. Such a second passage seat 30a is aligned with said first passage seat 20a along said advancement direction X.

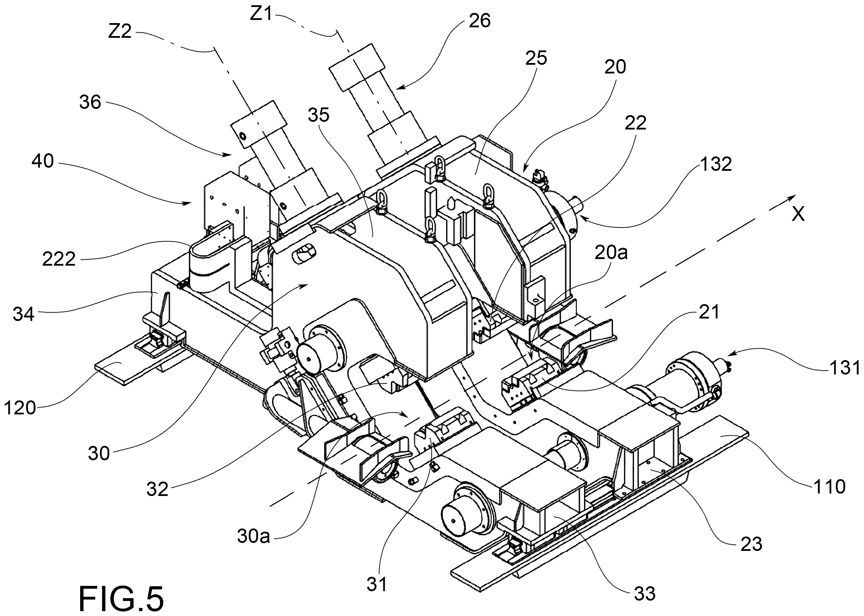

More in detail, as shown in figure 5, the two structures 20 and 30 are connected to each other by two support beams 110 and 120, parallel to the advancement direction X. In turn, the two support beams 110 and 120 are fixedly anchored to the two beams 11, 12 of the carriage 10. The first structure 20 is fixedly anchored to the two support beams 110, 120, while the second structure 30 is slidingly connected to the two support beams 110, 120 by means of linear guides 111, 121 to slide parallel to the advancement direction X with respect to the first structure 20. The two structures 20 and 30 are connected by means of one or more actuators 131, 132 (e.g., hydraulic cylinders) adapted to impose a relative motion between the two structures parallel to the advancement axis X.

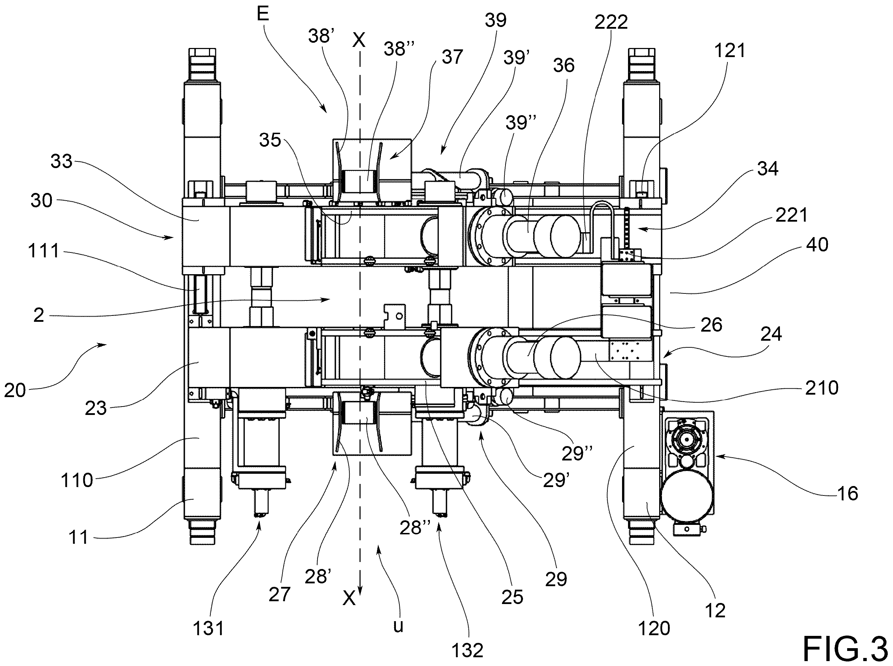

As can be seen in particular in figure 3, the two structures 20 and 30 are mutually positioned so that there is a gap 2 therebetween.

On the welding machine 1, an inlet E and an outlet U for the longitudinal objects can be identified. According to the embodiment shown in the accompanying figures, the first structure 20 (fixed) is arranged close to the outlet U, while the second structure 30 (movable) is arranged close to the inlet E.

The welding machine 1 further comprises:

- first gripping means 21, 22, arranged on said first structure 20 at said first passage seat 20a, for grasping the tail T of the first metal product M1 or the head H of the second metal product M2;
- second gripping means 31, 32, arranged on said second structure 30 at said second passage seat 30a, for grasping the head H of the second metal product M2 or the tail T of the first metal product M1.

In particular, the first gripping means comprise two clamps 21, 22, which are mutually opposed with respect to the first passage seat 20a and between which the longitudinal metal object slides. In more detail, as shown in figure 5, a first clamp 21 (lower clamp) is arranged in the lower part of the first passage seat 20a and a second clamp 22 (upper clamp) is arranged in the upper part of the first passage seat 20a. The two clamps 21 and 22 are movable with respect to each other so as to be moved closer and farther apart so as to apply a reversible gripping action to the longitudinal object. Preferably, the lower clamp 21 is fixed, while the upper clamp 22 is movable along an axis Z1 incident to the advancement axis X. For such a purpose, the machine 1 is provided with a first linear actuator 26 (e.g., a hydraulic, pneumatic or electric cylinder), which is supported by the first structure 20 and is adapted to move the upper clamp 22 along said axis Z1.

Similarly, the second gripping means also comprise two clamps 31, 32, which are mutually opposed with respect to the second passage seat 30a and between which the longitudinal metal object slides. In more detail, as shown in figure 5, a second clamp 31 (lower clamp) is arranged in the lower part of the first passage seat 30a and a second clamp 32 (upper clamp) is arranged in the upper part of the second passage seat 30a. The two clamps 31 and 32 are movable with respect to each other so as to be moved closer and farther apart so as to apply a reversible gripping action to the longitudinal object. Preferably, the lower clamp 31 is fixed, while the upper clamp 32 is movable along an axis Z2 incident to the advancement axis X. For such a purpose, the machine 1 is provided with a second linear actuator 36 (e.g., a hydrodynamic, pneumatic or electric cylinder), which is supported by the second structure 30 and is adapted to move the upper clamp 32 along said axis Z2.

In particular, said first structure 20 and said second structure 30 each extend longitudinally transversely to said advancement direction X between two respective longitudinally opposite support portions 23, 24 and 33, 34 at which each structure 20, 30 is connected to the carriage 10 by means of the aforesaid support beams 110 and 120.

Preferably, each structure also comprises a frame 25, 35 which is arranged between the respective support portions 23, 24 and 33, 34 and is configured to house the actuator 26, 36 of the respective gripping means 21, 22 and 31, 32.

Advantageously, the welding machine can also comprise a first guide device 27 and a second guide device 37 which are arranged at the outlet and inlet of the welding machine, respectively, and are adapted to support and guide longitudinal metal objects through the welding machine 1 close to the first and second passage seats. In particular, the first guide device 27 is supported by the first structure 20, while the second guide device 37 is supported by the second structure 30.

In particular, each guide device 27, 37 defines lead-in and guide channel 28', 38', at the bottom of which at least one sliding roller 28",38" is positioned.

Preferably, both such guide devices are movable in height to vary the height position with which they support the longitudinal metal objects passing through the welding machine 1. For such a purpose, each guide device 27, 37 is provided with respective movement means 29, 39, which in particular comprise a support guide 29',39' and an actuator 29", 39" (e.g., a pneumatic or hydraulic cylinder).

According to the aforesaid general embodiment of the invention, the welding machine 1 further comprises a power group 40 which can be supplied with mains voltage and is provided with conductors 210; 221, 222, connected to the first gripping means 21, 22 and to the second gripping means 31, 32, respectively, for supplying electric current to the tail and head of two longitudinal objects.

Advantageously, the conductors can be rigid or flexible depending on whether they need to ensure an electrical connection with fixed or variable distance.

Said power group 40 comprises:

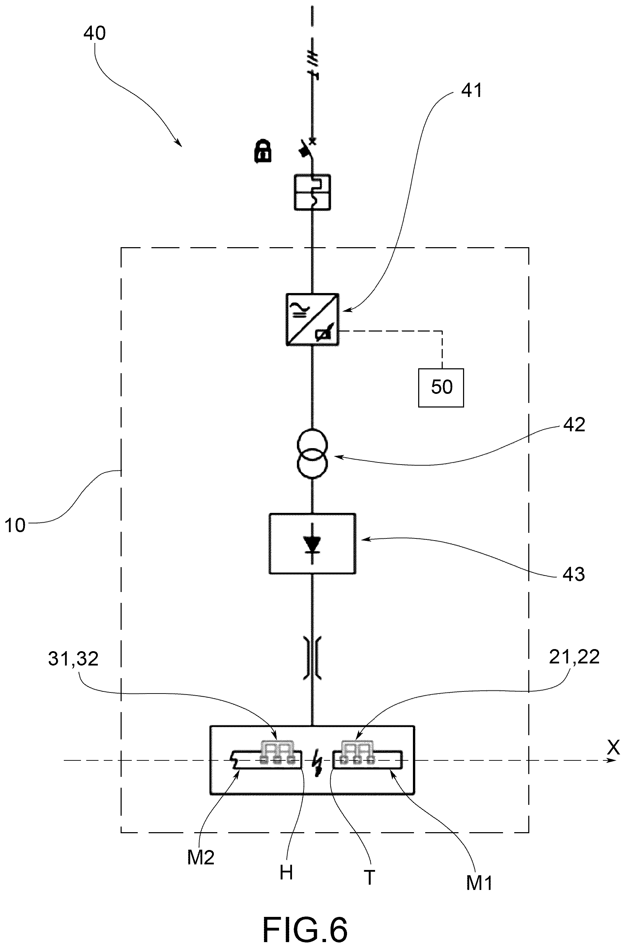

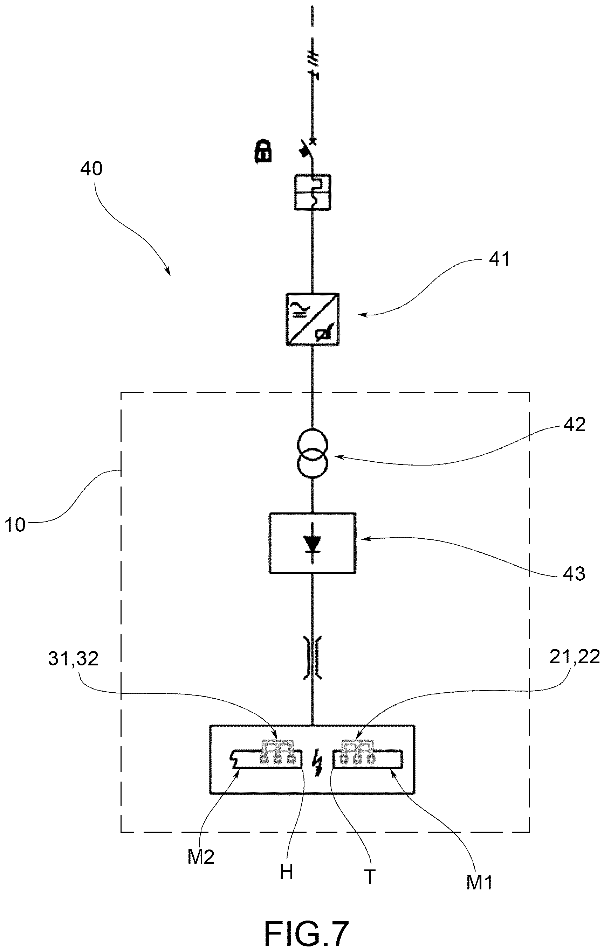

- at least one inverter 41, which can be installed on-board said carriage 10 (see figure 6) or outside said carriage 10 (see figure 7);
- at least one transformer 42, which is electrically powered by means of said inverter 41 and is placed on-board the carriage 10;
- at least one rectifier 43, which electrically connects the transformer 42 to said first gripping means 21,22 and to said second gripping means 31, 32 and is placed on-board the carriage; and
- a control unit 50.

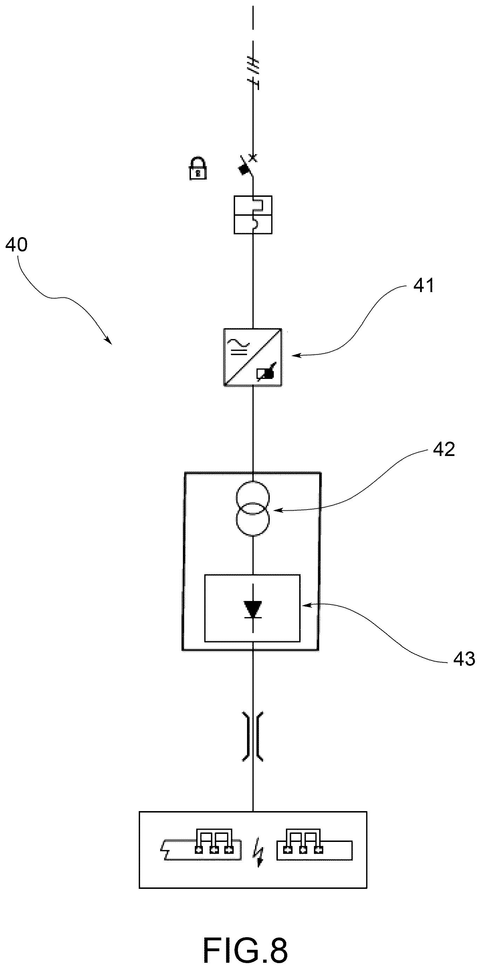

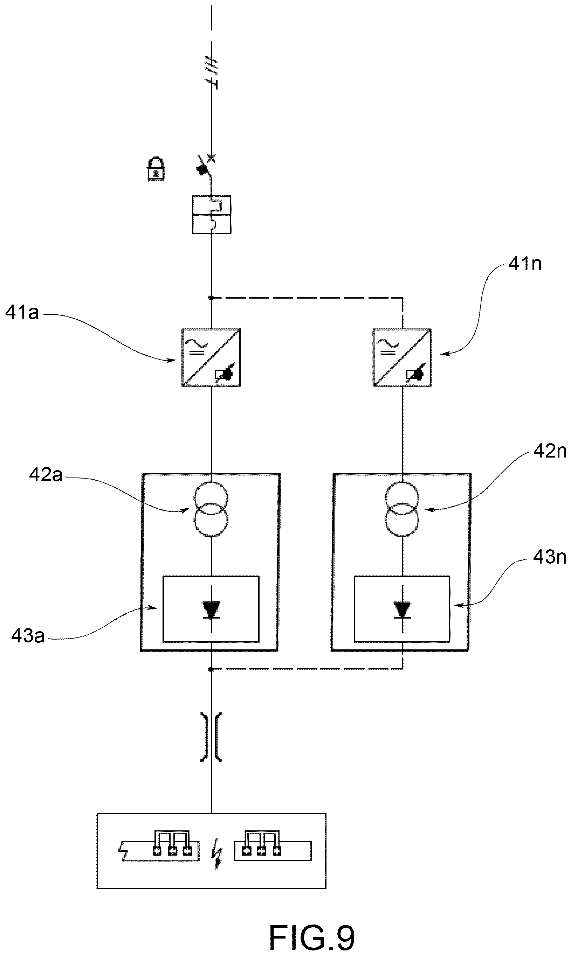

Preferably, as shown in figures 8 and 9, the rectifier 43 is integrated into the transformer 42.

The operation of the welding machine 1 according to the invention is described below.

Two longitudinal metal objects M1 and M2 (in particular, two billets) slide in sequence along the advancement axis X passing through the welding machine 1 at the two passage seats 20a and 30a.

In particular, the two billets M1 and M2 slide supported by the two guide devices 27 and 37 (preferably arranged one at the inlet and one at the outlet of the machine) that in this step of the welding process are in a raised position to avoid friction between the billets and the lower clamps 21 and 31 of the first and second gripping means during their transit.

The two billets continue to move until the tail T of the first billet M1 and the head H of the second billet M2 approach the centre of the gap 2 existing between the two structures 20 and 30. The head and tail of the billets are now in mutual contact.

At this point, the upper clamp 22 of the first gripping means (supported by the first (fixed) structure 20) and the upper clamp 32 of the second gripping means (supported by the second movable structure 30) slide downward by means of the actuation of the respective linear actuators (hydraulic cylinders 26 and 36) along axis Z1 and axis Z2, respectively, until they block the two billets M1 and M2 by pressing them against the respective two lower clamps 21 and 31.

Preferably, simultaneously with the movement of the upper clamps, the guide devices 27 and 37 are taken to the lowered position by the operation of the respective actuators 29" and 39" so that they do not interfere with the blocking of the billets between the upper and lower clamps.

Since the welding process is carried out with the whole machine in motion, in this step, the carriage 10 supporting the whole machine is moved according to a rectilinear motion and parallel to the advancement axis X of the billets.

The flashing step can now begin.

During the flashing step, current is allowed to flow between the two faces of the billets by means of said at least one transformer 42 which is physically connected to all four clamps 21, 22 and 31, 32 by means of the secondary circuit conductors 210, 221, 222. The aforementioned secondary conductors are designed so as to divide the positive pole of the electrical circuit on both clamps (upper and lower) of one structure and the negative pole in the respective clamps belonging to the other structure.

The upsetting step can follow.

The current flow is stopped when the preset melting level of the two billet faces is reached. The movable structure (the second structure 30), which is supported by the two linear guides positioned parallel to axis X, is fed by means of two hydraulic cylinders 131 and 132, which are fixed to the fixed structure (the first structure 20).

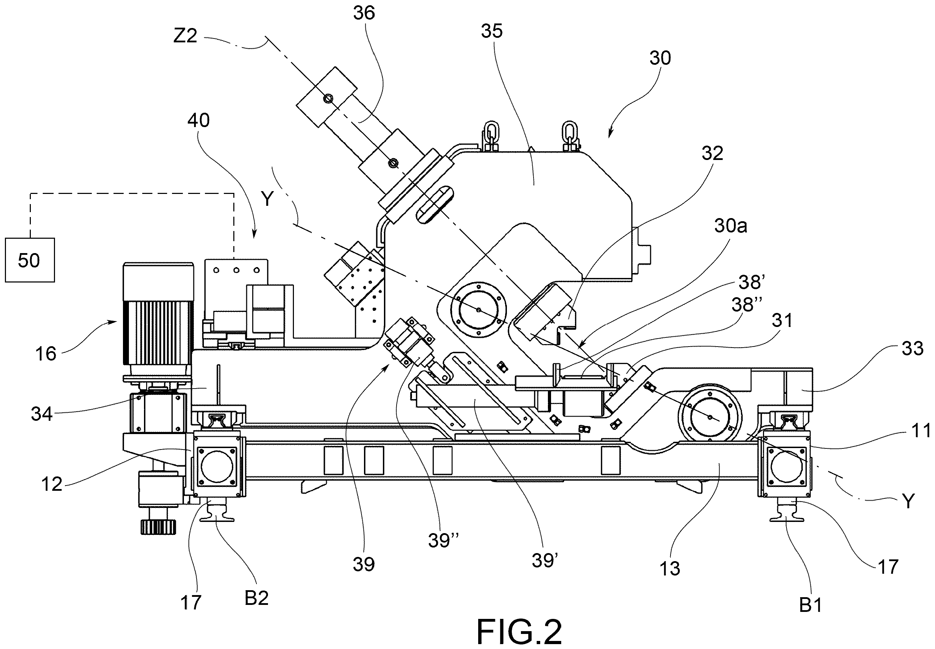

Preferably, as shown in figure 2, the axial centres of the two hydraulic cylinders 131 and 132 are aligned on an axis Y which intersects the axis X and is situated in particular at about 65° from the perpendicular of axis X. The two cylinders are equidistant with respect to axis X. The movement of the movable structure 30 parallel to axis X and in the direction of the fixed structure 20 generates the pressure between the two faces of the billets, ensuring their joining.

When the upsetting is completed, the two upper clamps 22 and 32 are returned to the initial position. Simultaneously, the two guide devices 27 and 37 are raised so as to support the billets from the previous contact with the two lower clamps 21 and 31. The movement means 16 of the carriage 10 reverse the travel direction and return the welding machine to a preset starting position, waiting for a new welding cycle. During the repositioning of the carriage to the starting position thereof, both hydraulic cylinders 131 and 132 simultaneously push the movable structure 30 back to the initial position thereof away from the fixed structure 20.

According to a first aspect of the invention, the inverter 41 is a single-phase or poly-phase inverter with variable frequency, and said control unit 50 is programmed to operate said inverter 41 at frequencies above 700 Hz.

Said at least one transformer 42 is sized to deliver a predetermined nominal power Pn at a predetermined nominal supply frequency fn.

According to a further aspect of the invention, having defined an operating power Pex to be generated during welding, two alternatives are possible in relation to the sizing characteristics of the transformer 42.

According to a first alternative, the predetermined nominal power Pn of the transformer 42 is lower than said predetermined operating power Pex and said nominal supply frequency fn is lower than 700 Hz. Said at least one transformer 42 is sized to deliver, at frequencies above 700 Hz, an actual power Pe equal to or greater than said predetermined operating power Pex.

According to a second alternative, the predetermined nominal power Pn of transformer 42 is at least equal to said predetermined operating power Pex and said nominal supply frequency fn is above 700Hz. Said at least one transformer 42 is sized to deliver, at frequencies above 700 Hz, an actual power Pe greater than said predetermined operating power Pex.

In both cases, the use of frequencies above 700 Hz allows meeting the energy requirements necessary to carry out the welding with a transformer 42 having small dimensions and low weight compared to the systems known to date adapted to flash weld longitudinal metal products, the operating electric power Pex to be delivered for welding being the same.

By virtue of the invention, having defined an operating power Pex, the welding machine 1 is thus capable of operating using transformers of small dimensions and low weight. In particular, the small size of the transformer results in a reduction of the spaces occupied by such a transformer and thus greater availability of free space to ensure the accessibility of operators to the welding machine.

By virtue of the invention, the welding machine 1 thus exhibits increased accessibility but without requiring significant increases in size.

By virtue of the invention, the welding machine for longitudinal metal objects also has no significantly higher construction costs than similar known machines.

According to the aforesaid first alternative, the transformer 42 (sized to deliver nominal power Pn less than Pex, at a nominal frequency fn less than 700 Hz) is forced to deliver power equal to or greater than Pex by operating it at a frequency above the nominal frequency fn. The electric power demand for welding is thus met by using a smaller transformer. However, such a mode has the disadvantage of increasing transformer losses, thus being inefficient.

According to the aforesaid second alternative, the transformer 42 (sized to deliver a nominal power Pn at least equal to Pex, at a nominal frequency fn greater than 700 Hz) can be operated at the nominal frequency fn by delivering the required power or be forced to deliver power greater than Pex by operating at a frequency greater than the nominal frequency fn. The electric power demand for welding is thus met by using a smaller transformer. Such a mode, when it involves operating the transformer at the nominal frequency, also has the advantage of minimizing the transformer losses, thus being much more efficient.

More in detail, with reference to figure 10, a transformer consists of a ring (core) made of ferromagnetic material (typically thin sheets of silicon steel) on which two windings are wound: the "primary," consisting of n1 turns and the "secondary" consisting of n2 turns. Therefore, this is a double dipole. If the primary is supplied by a voltage generator v1 ("primary voltage"), so that a current i1 ("primary current") flows through the primary, and the secondary is left open, so that the current i2 ("secondary current") is zero, a magnetic induction field will be established in the ring (to which the "main" flux φ shown in Figure 10 corresponds). The induction field lines also concatenate with the secondary winding, so that if i1 varies over time, by the Faraday's law (or electromagnetic induction law), a voltage v2 ("secondary voltage") will be induced at the secondary terminals. If the secondary is connected to a load (such as a resistor), current will thus circulate thereon. Therefore, by means of the transformer, is thus possible to transfer the electric power from the primary winding to the secondary one, without resorting to any electrical connection between the two windings; instead, the power transfer occurs through the magnetic field which is mainly present in the core of the transformer and is capable of exchanging energy with both circuits.

If the flux in the core is sinusoidal, for both windings, the relationship between the effective voltage E thereof, the supply frequency f, the number of turns N, the area a of the core cross-section, and the peak magnetic flux density B is given by the FEM equation below:

$$E = \frac{2\pi f NaB}{\sqrt{2}} \approx 4.44 f NaB$$

Assuming a constant magnetic flux density B, for the same effective voltage E, a higher frequency drastically reduces the core cross section and the number of turns on a winding.

Similarly, assuming constant magnetic flux density B, cross-section of the core, and number of turns on a winding, a higher frequency drastically increases the effective voltage E.

Therefore, the f.e.m. of a transformer at a given flux intensity increases with frequency. Operating at higher frequencies, the transformers can be physically more compact because a given core can transfer more power without reaching saturation, and fewer turns are needed to obtain the same impedance.

By virtue of the invention, the problem of ensuring adequate accessibility to a welding machine is thus essentially solved by reducing the dimensions and weight of the transformer and not (or not necessarily) by changing the arrangement of the transformer itself on the welding machine.

Preferably, the control unit 50 is programmed to cause said inverter 41 to operate at frequencies between 700 and 2000 Hz.

More preferably, the control unit 50 is programmed to cause said inverter 41 to operate at frequencies between 900 and 1100 Hz and even more frequently at a frequency equal to about 1000 Hz.

By utilizing the aforesaid frequencies, drastically small dimensions and low weights of the transformer(s) are achieved as compared to known systems applied to billet welding.

The size of the power group (transformer(s)) is so small that the placement thereof inside the welding machine is not limiting in terms of occupied space. This benefits the freedom of positioning of the transformer(s), increasing the accessibility and ease of maintenance of the machine.

Since the dimensions and weight of the transformers are no longer a constraining factors, it is possible to choose a position for the transformers which is as far away as possible from the axis on which the welding occurs. Such a choice can be made by simultaneously creating spaces for greater accessibility to conventional lifting means to operate within the machine itself, so that ordinary and extraordinary machine maintenance operations are facilitated.

All this can be accomplished without increasing the total size of the welding machine.

Advantageously, by virtue of the invention, the power group (transformer(s)) can also be arranged inside the machine, as close as possible to the welding clamps, so as to minimize the length of the conductors connecting them to the clamps and thus reducing the electrical impedance generated by the conductors.

Advantageously, the welding machine is powered by the distribution network or cell systems.

The power group 40 can comprise a single transformer 42 (as shown in figures 6, 7 and 8) or a plurality of transformers (42a, ... 42n) connected together in parallel (as shown in figure 9).

Each transformer 42a,...42n is powered by a variable-frequency inverter 41a,...41n dedicated thereto and is electrically connected to the gripping means 21,22 and 31,32 preferably by means of a rectifier 43a,...43n dedicated thereto.

Each of said transformers is sized to deliver a predetermined nominal power Pna,...Pnn at a predetermined nominal supply frequency fn.

The transformers are sized according to two possible alternatives, similar to the case of a single transformer.

According to a first alternative, the sum of the nominal powers Pna,... Pnn of said plurality of transformers is less than said predetermined operating power Pex to be generated during welding and said predetermined nominal supply frequency fn is less than 700Hz. Said plurality of transformers is sized to deliver as a whole at frequencies above 700HZ an actual power Pe equal to or greater than said predetermined operating power Pex.

According to a second alternative, the sum of the nominal powers Pna,...Pnn of said plurality of transformers is at least equal to said predetermined operating power Pex to be generated during welding and said predetermined nominal supply frequency fn is greater than 700 Hz. Said plurality of transformers is sized to deliver as a whole at frequencies above said nominal supply frequency fn an actual power Pe greater than said predetermined operating power Pex.

Preferably, said predetermined operating power Pex has a value between 200 and 2000 kVA.

Advantageously, as a function of the nominal power each of said one or more transformers 42,42a, ...42n has a weight between 150 and 700kg.

Advantageously, as a function of the nominal power each of said one or more transformers 42,42a, ...42n has:

- a height between 450 and 650 mm;
- a length between 400 and 450 mm; and
- a depth between 300 and 350 mm.

Operatively, during billet welding, it can be necessary to perform a voltage boost in the first step of welding adapted to trigger the arc and creating plasma. Once the arc has been triggered, the voltage must be decreased and brought to a steady-state value, which must be maintained during the second step of welding until it is completed.

Preferably, the power group 40 can comprise a system adapted to provide a voltage boost during welding.

More in detail, such a system can be obtained by means of a device in the primary circuit of the transformer adapted to select a preset number of turns, referred to as active turns. Specifically, such a device must decrease the number of active turns of the primary circuit as compared to those of the secondary in order to have a voltage boost at the output of the transformer.

Indeed, as known, the ratio between the secondary (Vs) and primary (Vp) circuit voltages is given by the ratio between the number of turns of the secondary winding (Ns) and the primary winding (Np):

$$\frac{V_S}{V_P} = \frac{N_S}{N_P}$$

Therefore, it is necessary for the situation Ns>Np to occur in order to increase the voltage. Such a condition occurs when the device selects fewer active turns in the primary.

Alternatively, the system adapted to provide the voltage boost can be achieved by means of a circuit element capable of varying the transformer primary circuit voltage. In particular, such an element (step-up converter) is capable of increasing the voltage of the inverter, which is upstream of the transformer, resulting in an increase in the voltage on the primary Vp. By keeping the ratio of turns constant, an increase in voltage on the primary in turn leads to an increase in voltage on the secondary.

The system provides a voltage boost between 1 and 1.8 times the nominal welding voltage.

The system provides a voltage boost preferably equal to 1.4 times the nominal welding voltage value.

Preferably, during the step of welding, the power factor on the power grid will have a value between 0.92 and 1.

As already mentioned above, by virtue of the invention, the problem of ensuring and adequate accessibility to a welding machine is substantially solved by reducing the dimensions and weight of the transformer and not (or not necessarily) by changing the arrangement of the transformer itself on the welding machine. In other words, due the fact that the transformer or transformers has/have significantly small dimensions and low weights, they can be arranged in the welding machine substantially unconstrained.

According to a preferred embodiment shown in the accompanying figures, said at least one transformer 42 or said plurality of transformers 42a, ... 42n can be arranged behind the frames 25, 35 of said two structures 20, 30 with respect to said two passage seats 20a,30a. Preferably, said at least one transformer 42 or said plurality of transformers 42a, ... 42n is arranged at the support portions 24, 34 of said structures 20,30. In particular, said at least one transformer 42 or said plurality of transformers 42a, ... 42n is arranged at the support portion 24 of the fixed structure 20.

According to an alternative embodiment, not shown in the accompanying figures, said at least one transformer 42 or said plurality of transformers 42a, ... 42n is arranged on the top of the frame 25, 35 of said first 20 or said second 30 structure. Preferably, they are arranged on the top of the frame 25 of the fixed structure 20.

According to an alternative embodiment, not shown in the accompanying figures, said at least one transformer 42 or said plurality of transformers 42a, ... 42n can be arranged in front of the frames 25, 35 of said two structures 20, 30 with respect to said two passage seats 20a,30a. Preferably, said at least one transformer 42 or said plurality of transformers 42a, ... 42n is arranged at the support portions 23, 33 of said structures 20,30. In particular, said at least one transformer 42 or said plurality of transformers 42a, ... 42n is arranged at the support portion 23 of the fixed structure 20.

According to a further alternative embodiment, not shown in the accompanying figures, said at least one transformer 42 or said plurality of transformers 42a, ... 42n can be arranged on an outer side of the frame 25, 35 of one of said two structures 20, 30, where outer side of a structure means the wall of the frame of a structure opposite to the wall facing the gap 2 between said two structures 20, 30.

As already mentioned above, in particular, the carriage 10 comprises a framework which is delimited transversely to the advancement direction X by the two beams 11, 12.

Preferably, said framework is sized to support the two structures 20 and 30 within the size thereof in plan.

According to an alternative embodiment shown in figure 11, the carriage can comprise an appendage 15 extending in a cantilevered manner outside said framework transversely to said advancement direction X, preferably behind the two frames 25, 35. Said at least one transformer 42 or said plurality of transformers 42a, ... 42n can be arranged on said appendage 15.

Advantageously, by virtue of the transformers being small in size and weight, the size of appendage 15 can also be minimized.

The invention provides several advantages, some of which have already been described.

The welding machine 1 for longitudinal metal objects according to the invention exhibits increased accessibility without requiring significant increases in size.

The welding machine 1 for longitudinal metal objects according to the invention maintains adequate operating functionality.

The welding machine 1 for longitudinal metal objects according to the invention is easy and convenient to manage.

The welding machine 1 for longitudinal metal objects according to the invention has no significantly higher construction costs than similar known machines.

Therefore, the invention thus devised achieves the preset objects.

Obviously, in the practical implementation thereof, it may also take shapes and configurations other than that disclosed above without departing from the present scope of protection.

Moreover, all details may be replaced by technically equivalent elements, and any size, shape, and material may be used according to needs.

**Claims**

1. Welding machine (1) of the flash welding type, intended to be installed on a transport line of longitudinal metal products moving along an advancement direction (X), for welding together the tail of a first longitudinal metal product with the head of a second longitudinal metal product along said advancement direction (X), the welding machine (1) comprising:

   - a carriage (10) suitable to slide along the advancement direction (X),
   - a first structure (20) which is supported by said carriage (10) and defines in a portion thereof a first passage seat for the longitudinal metal products advancing along said transport line;
   - first gripping means (21, 22), arranged on said first structure (20) at said first passage seat, for grasping the tail of the first metal product or the head of the second metal product;
   - a second structure (30) which is slidably supported by said carriage (10), for sliding parallel to the advancement direction (X) with respect to both the first structure (20) and the carriage (10) itself, and which defines in a portion thereof a second passage seat for longitudinal metal products advancing along said transport line, said second passage seat being aligned with said first passage seat along said advancement direction (X);
   - second gripping means (31, 32), arranged on said second structure (30) at said second passage seat, for grasping the head of the second metal product or the tail of the first metal product;
   - a power group (40) which can be supplied with mains voltage and is provided with conductors (210; 121, 122), connected to the first gripping means (21, 22) and to the second gripping means (31, 32), respectively, for supplying electric current to said tail and to said head; wherein said power group (40) comprises:
     - at least one inverter (41) which can be installed on board or outside said carriage;
     - at least one transformer (42) which is electrically powered by means of said inverter (41) and is placed on board the carriage;
     - at least one rectifier (43) which electrically connects the transformer (42) to said first and to said second gripping means (21, 22) and is located on board the carriage;
   - a control unit (50);
   **characterised in that** said inverter (41) is a single-phase or poly-phase inverter with variable frequency, said control unit (50) being programmed to operate said inverter (41) at frequencies greater than 700 Hz and **in that** said at least one transformer is sized to deliver a predefined nominal power Pn at a predefined nominal supply frequency fn,
   wherein, defined an operating power Pex to be generated during welding, alternatively:

   - said predefined nominal power of the transformer Pn is less than said predefined operating power Pex and said nominal supply frequency fn is less than 700Hz, said at least one transformer (42) being sized so as to deliver, at frequencies greater than 700HZ, an effective power Pe equal to or greater than said predefined operating power Pex; or
   - said predefined nominal power of the transformer Pn is at least equal to said predefined operating power Pex and said nominal supply frequency fn is greater than 700Hz, said at least one transformer (42) being sized so as to deliver, at frequencies greater than said nominal supply frequency fn, an effective power Pe greater than said predefined operating power Pex.

2. Welding machine (1) according to claim 1, wherein said control unit (50) is programmed to operate said inverter (41) at frequencies between 700 and 2000 Hz.

3. Welding machine (1) according to claim 1 or 2, wherein said control unit (50) is programmed to operate said inverter (41) at frequencies comprised between 900 and 1100 Hz and preferably equal to about 1000 Hz.

4. Welding machine (1) according to any one of the preceding claims, wherein said power group (40) comprises a plurality of transformers (42a ,42b,... 42n) connected to each other in parallel, each of said transformers being sized to deliver a predefined nominal power Pna, Pnb ... Pnn at said predefined nominal supply frequency fn and wherein the sum of the nominal powers Pna, Pnb... Pnn of said plurality of transformers is alternatively:

   - less than said predefined operating power Pex to be generated during welding if said predefined nominal supply frequency fn is less than 700Hz, said plurality of transformers being sized so as to deliver, as a whole, at frequencies greater than 700HZ, an effective power Pe equal to or greater than said predefined operating power Pex

Or

- at least equal to said predefined operating power Pex to be generated during welding if said predefined nominal supply frequency fn is greater than 700Hz, said plurality of transformers being sized so as to deliver, as a whole, at frequencies greater than said nominal supply frequency fn, an effective power Pe greater than said predefined operating power Pex.

5. Welding machine (1) according to any one of the preceding claims, wherein said predefined operating power Pex has a value comprised between 200 and 2000 kVA.

6. Welding machine (1) according to any one of the preceding claims, wherein each of said one or more transformers (42; 42a, 42b, ... 42n) has a weight comprised between 150 and 700kg.

7. Welding machine (1) according to any one of the preceding claims, wherein each of said one or more transformers (42; 42a, 42b, ... 42n) has:

   - a height h comprised between 450 and 650mm;
   - a length L comprised between 400 and 450 mm; and
   - a depth p comprised between 300 and 350 mm.

8. Welding machine (1) according to any one of the preceding claims, wherein said power group (40) comprises a system suitable to provide a voltage boost.

9. Welding machine (1) according to any one of the preceding claims, wherein said first (20) and second structure (30) each extend longitudinally transversely with respect to said advancement direction (X) between two longitudinally opposite support portions (23, 24; 33, 34) at which the structure (20, 30) is connected to the carriage (10) and wherein between the respective support portions each structure comprises a frame (25, 35) which is configured to house an actuator of the respective gripping means (21, 22; 31, 32).

10. Welding machine (1) according to claim 9, wherein said at least one transformer (42) or said plurality of transformers (42a, 42b, ... 42n) is arranged on the top of the frame (25, 35) of said first (20) or said second structure (30).

11. Welding machine (1) according to claim 9, wherein said at least one transformer (42) or said plurality of transformers (42a, 42b, ... 42n) is arranged behind the frames (25, 35) of said two structures (20; 30) with respect to said two passage seats, preferably at the support portions of said structures.

12. Welding machine (1) according to claim 9, wherein said at least one transformer (42) or said plurality of transformers (42a, 42b, ... 42n) is arranged in front of the frames (25, 35) of said two structures (20; 30) with respect to said two passage seats at the support portions.

13. Welding machine (1) according to claim 9, wherein said at least one transformer (42) or said plurality of transformers (42a, 42b, ... 42n) is arranged on an outer side of the frame (25, 35) of one of said two structures (20; 30).

14. Welding machine (1) according to claim 9, wherein said carriage (10) comprises two beams (11, 12) which are provided with wheels (17) suitable to slide said carriage (10) parallel to said advancement direction (X) along a track and are transversely connected to each other to form a framework, sized to support said two structures within the encumbrance in plan thereof, and wherein said carriage comprises an appendage (15) extending cantilevered outside said framework transversely to said advancement direction (X) behind said frames (25, 35), and wherein said at least one transformer (42) or said plurality of transformers (42a, 42b, ... 42n) is arranged on said appendage (15).

FIG.1

FIG.2

FIG.3

EP 4 559 613 A1

FIG.4

EP 4 559 613 A1

FIG.5

EP 4 559 613 A1

FIG.6

FIG.7

FIG.8

FIG.9

FIG.10

FIG.11

Europäisches
Patentamt

European
Patent Office

Office européen
des brevets

# EUROPEAN SEARCH REPORT

**Application Number**

EP 24 21 3105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/156738 A1 (DANIELI OFF MECC [IT]) 12 August 2021 (2021-08-12) * page 5, line 2 - page 7, line 15; claims 1,2; figures 1, 2, 7, 8 * * page 14, lines 11-20 * | 1-9, 11-14 | INV. B23K11/04 B23K37/02 B23K37/04 |
| Y | EP 3 812 055 A1 (DANIELI OFF MECC [IT]) 28 April 2021 (2021-04-28) * paragraphs [0001], [0026] - [0032]; claim 1; figures 1-3 * | 1-3,5-10 | |
| Y | CN 108 746 961 A (WENLING ELECTRIC WELDING EQUIPMENT FACTORY) 6 November 2018 (2018-11-06) * claims 2,7,32 * | 1-14 | |
| Y | JP 2003 033883 A (NIPPON KOKAN KK) 4 February 2003 (2003-02-04) * paragraphs [0001], [0006] * | 1,2,4-14 | |
| Y | CN 102 522 905 A (ZHENJIANG HUANGXU ANCHOR CHAIN CO LTD) 27 June 2012 (2012-06-27) * paragraphs [0001], [0002], [0005] - [0008]; claim 1 * | 1-14 | TECHNICAL FIELDS SEARCHED (IPC) B23K |
| Y | EP 3 693 981 A1 (BOSCH GMBH ROBERT [DE]) 12 August 2020 (2020-08-12) * paragraphs [0002], [0004], [0038] * | 1-14 | |
| Y | EP 3 232 453 B1 (BOSCH GMBH ROBERT [DE]) 12 June 2019 (2019-06-12) * paragraphs [0001], [0009] * | 1-14 | |
| A | US 6 107 594 A (MATSUO GIICHI [JP] ET AL) 22 August 2000 (2000-08-22) * column 1, lines 28-31; figure 1 * * column 1, lines 37-66 * | 4,5 | |

-/--

The present search report has been drawn up for all claims

| Place of search | Date of completion of the search | Examiner |
|---|---|---|
| Munich | 26 March 2025 | Schloth, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP H09 267183 A (KAWASAKI STEEL CO) 14 October 1997 (1997-10-14) * paragraphs [0001], [0039] * ----- | 8 | |

TECHNICAL FIELDS SEARCHED (IPC)

The present search report has been drawn up for all claims

| Place of search | Date of completion of the search | Examiner |
|---|---|---|
| Munich | 26 March 2025 | Schloth, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3105

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | | Publication date | Patent family member(s) | | Publication date |
|---|---|---|---|---|---|
| WO 2021156738 | A1 | 12-08-2021 | CN | 115297975 A | 04-11-2022 |
| | | | EP | 4100179 A1 | 14-12-2022 |
| | | | ES | 2980908 T3 | 03-10-2024 |
| | | | JP | 7457136 B2 | 27-03-2024 |
| | | | JP | 2023511698 A | 22-03-2023 |
| | | | PL | 4100179 T3 | 29-07-2024 |
| | | | US | 2023052794 A1 | 16-02-2023 |
| | | | WO | 2021156738 A1 | 12-08-2021 |
| EP 3812055 | A1 | 28-04-2021 | CN | 112705888 A | 27-04-2021 |
| | | | EP | 3812055 A1 | 28-04-2021 |
| | | | JP | 7075978 B2 | 26-05-2022 |
| | | | JP | 2021065935 A | 30-04-2021 |
| | | | RU | 2760188 C1 | 22-11-2021 |
| | | | US | 2021121972 A1 | 29-04-2021 |
| CN 108746961 | A | 06-11-2018 | NONE | | |
| JP 2003033883 | A | 04-02-2003 | NONE | | |
| CN 102522905 | A | 27-06-2012 | NONE | | |
| EP 3693981 | A1 | 12-08-2020 | CN | 111554486 A | 18-08-2020 |
| | | | DE | 102019203603 A1 | 13-08-2020 |
| | | | EP | 3693981 A1 | 12-08-2020 |
| | | | ES | 2952035 T3 | 26-10-2023 |
| | | | SI | 3693981 T1 | 29-09-2023 |
| EP 3232453 | B1 | 12-06-2019 | EP | 3232453 A1 | 18-10-2017 |
| | | | ES | 2745209 T3 | 28-02-2020 |
| US 6107594 | A | 22-08-2000 | EP | 0911108 A1 | 28-04-1999 |
| | | | JP | 3339356 B2 | 28-10-2002 |
| | | | JP | H10286677 A | 27-10-1998 |
| | | | KR | 20000016258 A | 25-03-2000 |
| | | | US | 6107594 A | 22-08-2000 |
| | | | US | 6262385 B1 | 17-07-2001 |
| | | | WO | 9846390 A1 | 22-10-1998 |
| JP H09267183 | A | 14-10-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021156738 A1